(19)

**Europäisches Patentamt**

**European Patent Office**

**Office européen des brevets**

(11) **EP 3 410 721 A1**

(12) **EUROPEAN PATENT APPLICATION**

(43) Date of publication:
**05.12.2018 Bulletin 2018/49**

(51) Int Cl.:
***H04N 19/593*** *(2014.01)*

(21) Application number: **17305629.2**

(22) Date of filing: **31.05.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **RATH, Gagan**
**35576 Cesson-Sévigné (FR)**

• **GALPIN, Franck**
**35576 Cesson-Sévigné (FR)**
• **RACAPE, Fabien**
**35576 Cesson-Sévigné (FR)**
• **LELEANNEC, Fabrice**
**35576 Cesson-Sévigné (FR)**

(74) Representative: **Huchet, Anne et al**
**InterDigital CE Patent Holdings**
**1-5, Rue Jeanne d'Arc**
**92130 Issy-les-Moulineaux (FR)**

(54) **METHOD AND APPARATUS FOR BI-DIRECTIONAL INTRA PREDICTION IN VIDEO CODING**

(57)     In a particular implementation, bi-directional intra prediction is used in video encoding and decoding. In one embodiment, to predict a target sample in a current block with intra prediction at a vertical negative prediction, a top reference array may be constructed with left and above neighbor blocks, and a right (and bottom) reference array may be estimated also based on the left and above neighbor blocks. Projecting the target sample along the prediction direction to the top and right (or bottom) reference array, two predictors on the opposite sides of the target sample can be obtained. An interpolated value of these two predictors can be used to predict the target sample. Whether or not to use bi-directional intra prediction for the current block may be indicated by a flag at a block level in a bitstream.

**FIG. 5A**

EP 3 410 721 A1

**Description**

TECHNICAL FIELD

The present embodiments generally relate to a method and an apparatus for video encoding and decoding, and more particularly, to a method and an apparatus for intra prediction for negative directions.

BACKGROUND

To achieve high compression efficiency, image and video coding schemes usually employ prediction and transform to leverage spatial and temporal redundancy in the video content. Generally, intra or inter prediction is used to exploit the intra or inter frame correlation, then the differences between the original image and the predicted image, often denoted as prediction errors or prediction residuals, are transformed, quantized and entropy coded. To reconstruct the video, the compressed data is decoded by inverse processes corresponding to the prediction, transform, quantization and entropy coding.

Intra prediction in video compression refers to the spatial prediction of a block of samples using information from causal neighbor blocks, that is, neighboring blocks in the same frame which have already been encoded or decoded. Intra prediction is a powerful coding tool since it allows for high compression efficiency in INTRA frames, as well as in INTER frames. Therefore, intra prediction has been included as a core coding tool in many video compression standards including, but not limited to, H.264/AVC and H.265/HEVC.

SUMMARY

According to a general aspect of the present principles, a method for video decoding is presented, comprising: decoding a directional intra prediction mode for a current block of a picture in a video, said decoded intra prediction mode having a negative direction; accessing a first predictor and a second predictor for a sample within said current block, wherein said sample is substantially located, on a line along said direction, between said first and second predictors; predicting a sample value of said sample, by using said first and second predictors; and decoding said sample of said current block based on said predicted sample value.

According to another general aspect of the present principles, a method for video encoding is presented, comprising: accessing a directional intra prediction mode for a current block of a picture in a video, said accessed intra prediction mode having a negative direction; accessing a first predictor and a second predictor for a sample within said current block, wherein said sample is substantially located, on a line along said direction, between said first and second predictors; predicting a sample value of said sample, by using said first and second predictors; and encoding said current block based on said predicted sample value.

According to another general aspect of the present principles, an apparatus for video decoding is presented, comprising at least a memory and one or more processors, wherein the one or more processors are configured to: decode a directional intra prediction mode for a current block of a picture in a video, said decoded intra prediction mode having a negative direction; access a first predictor and a second predictor for a sample within said current block, wherein said sample is substantially located, on a line along said direction, between said first and second predictors; predict a sample value of said sample, by using said first and second predictors; and decode said sample of said current block based on said predicted sample value.

According to another general aspect of the present principles, an apparatus for video encoding, comprising at least a memory and one or more processors, wherein the one or more processors are configured to: access a directional intra prediction mode for a current block of a picture in a video, said accessed intra prediction mode having a negative direction; access a first predictor and a second predictor for a sample within said current block, wherein said sample is substantially located, on a line along said direction, between said first and second predictors; predict a sample value of said sample, by using said first and second predictors; and encode said current block based on said predicted sample value.

In one embodiment, said predicted sample value is based on an interpolation of values of said first and second predictor. Said first predictor may be determined from one or more reference samples of an above or left neighbor block of said current block, and said second predictor may be determined from one or more second reference samples of a set of reference samples, wherein said set of reference samples corresponds to one of (1) an estimated bottom reference array of said current block and (2) an estimated right reference array of said current block.

In one embodiment, said estimated bottom reference array or said estimated right is estimated based on one or more samples from said above or left neighbor block. For example, said estimated right reference array may be estimated based on a bottom-right sample of said above neighbor block and a bottom-right sample of said left neighbor block. In particular, said estimated right reference array may be estimated based on an interpolation of said bottom-right sample of said above neighbor block and said bottom-right sample of said left neighbor block.

The number of reference samples in said estimated right reference array may be based on W + H, and wherein W and H are a width and height of said current block, respectively. For example, said estimate right reference array may have W+H or W+H+1 samples.

For simplicity, said estimated bottom reference array may be estimated using a bottom-right sample of said left neighbor block.

To indicate whether a bi-directional intra prediction mode may be used for said current block, a flag may be signaled in the high-level syntax, for example, at a slice level, a picture level, or a sequence level. In addition, a block-level flag may be used to indicate whether a block with a directional intra prediction mode uses uni- or bi-directional prediction.

According to another general aspect of the present principles, a video signal is formatted to include: encoded data indicative of a directional intra prediction mode for a current block of a picture in a video, said accessed intra prediction mode having a negative direction; and encoded data of a difference between a sample value of a sample of said current block and a sample value of a corresponding predicted sample, wherein said predicted sample is generated based on a first predictor and a second predictor for said sample within said current block, and wherein said sample is substantially located, on a line along said direction, between said first and second predictors.

The present embodiments also provide a computer readable storage medium having stored thereon instructions for encoding or decoding video data according to the methods described above. The present embodiments also provide a computer readable storage medium having stored thereon a bitstream generated according to the methods described above. The present embodiments also provide a method and apparatus for transmitting the bitstream generated according to the methods described above.

BRIEF DESCRIPTION OF THE DRAWINGS

FIG. 1 illustrates a block diagram of an exemplary HEVC (High Efficiency Video Coding) video encoder.

FIG. 2A is a pictorial example depicting the HEVC reference sample generation, and FIG. 2B is a pictorial example depicting intra prediction directions in HEVC.

FIG. 3 illustrates a block diagram of an exemplary HEVC video decoder.

FIG. 4 is a pictorial example depicting the prediction and construction of the top reference array.

FIG. 5A and FIG. 5B are pictorial examples depicting bi-directional intra prediction with a predictor from a top reference array and another predictor from an estimated right reference array for an intra prediction mode with a negative direction, according to an embodiment of the present principles.

FIG. 6A and FIG. 6B are pictorial examples depicting bi-directional intra prediction with a predictor from the top reference array and another predictor from an estimated bottom reference array for an intra prediction mode with a negative direction, according to an embodiment of the present principles.

FIG. 7 illustrates an exemplary method of performing bi-directional intra prediction in video encoding or decoding, according to an embodiment of the present principles.

FIG. 8 illustrates an exemplary method of video encoding with bi-directional intra prediction, according to an embodiment of the present principles.

FIG. 9 illustrates an exemplary method of video decoding with bi-directional intra prediction, according to an embodiment of the present principles.

FIG. 10 illustrates a block diagram of an exemplary system in which various aspects of the exemplary embodiments of the present principles may be implemented.

DETAILED DESCRIPTION

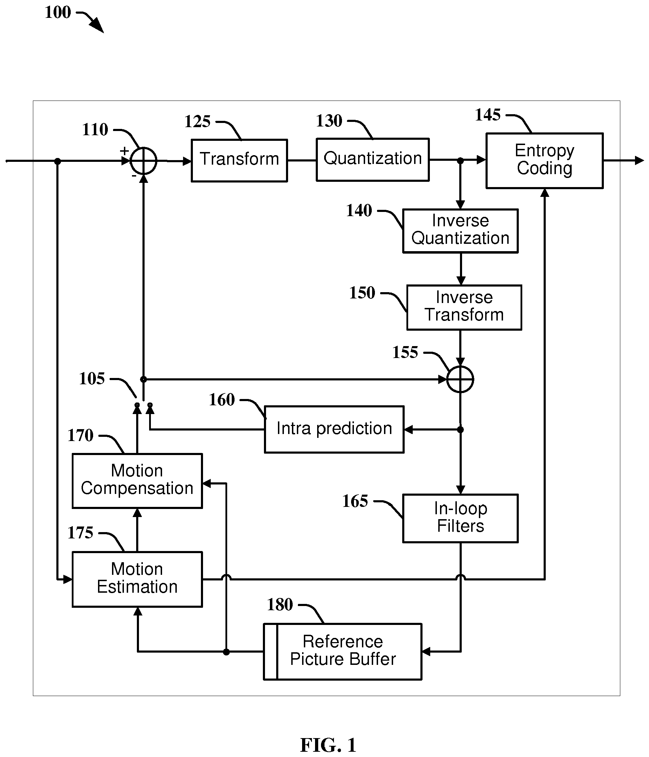

FIG. 1 illustrates an exemplary HEVC encoder 100. To encode a video sequence with one or more pictures, a picture is partitioned into one or more slices where each slice can include one or more slice segments. A slice segment is organized into coding units, prediction units and transform units.

In the present application, the terms "reconstructed" and "decoded" may be used interchangeably, and the terms "picture" and "frame" may be used interchangeably. Usually, but not necessarily, the term "reconstructed" is used at the encoder side while "decoded" is used at the decoder side.

The HEVC specification distinguishes between "blocks" and "units," where a "block" addresses a specific area in a sample array (e.g., luma, Y), and the "unit" includes the collocated blocks of all encoded color components (Y, Cb, Cr, or monochrome), syntax elements, and prediction data that are associated with the blocks (e.g., motion vectors).

For coding, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU. In the present application, the term "block" can be used to refer to any of CTU, CU, PU, TU, CB, PB and TB. In addition, the "block" can also be used to refer to a macroblock and a partition as specified in H.264/AVC or other video coding standards, and more generally to refer to an array of data of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Prediction residuals are calculated by subtracting (110) the predicted block from the original image block.

In order to exploit the spatial redundancy, CUs in intra mode are predicted from reconstructed neighboring samples within the same slice. The causal neighboring CUs have already been encoded/decoded when the encoding/decoding of the current CU is considered. To avoid mismatch, the encoder and the decoder have the same prediction. Therefore, both the encoder and the decoder use the information from the reconstructed/decoded neighboring causal CUs to form prediction for the current CU.

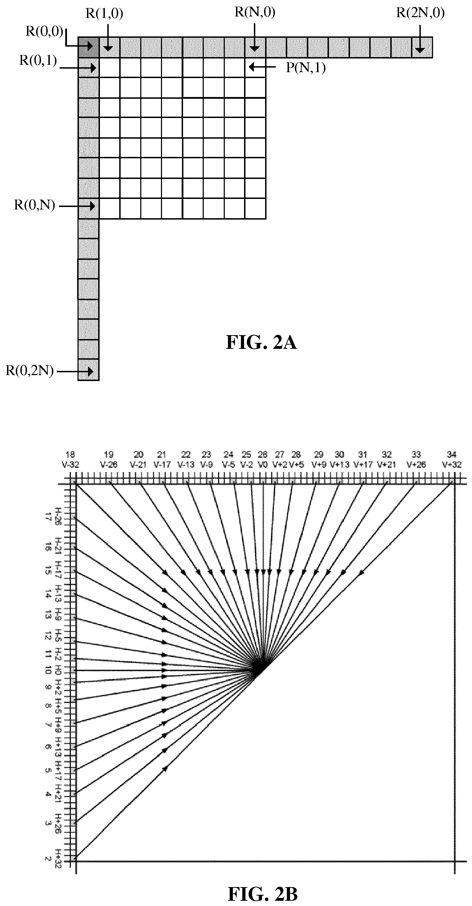

The intra prediction process in HEVC includes three steps: (1) reference sample generation, (2) intra sample prediction, and (3) post-processing of predicted samples. Exemplary HEVC reference samples are illustrated in FIG. 2A, where the reference sample value at coordinate (x, y), with respect to one sample above and to the left of the above-left corner of the current block, is indicated by R(x,y), and the predicted sample value at coordinate (x, y) of the current block is indicated by P(x,y). For a CU of size NxN, a row of 2N decoded samples on the top is formed from the decoded CUs. Similarly, a column of 2N samples on the left is formed from the decoded CUs. The corner sample from the above-left decoded CU is used to fill up the gap between the above row and the left column references. If some of the samples are not available, for example, when the corresponding CUs is not in the same slice or the current CU is at a frame boundary, then reference sample substitution is performed where the missing samples are copied from the available samples in a clock-wise direction. Then, depending on the current CU size and the prediction mode, the reference samples are filtered using a specified filter.

The next step, i.e., the intra sample prediction, consists of predicting the samples of the target CU based on the reference samples. In order to predict different kinds of content efficiently, HEVC supports a range of prediction methods. In particular, planar and DC prediction modes are used to predict smooth and gradually changing regions, whereas directional prediction modes (also referred to as "angular prediction modes") are used to capture different directional structures. HEVC supports 33 directional prediction modes which are indexed from 2 to 34. These prediction modes correspond to different prediction directions as illustrated in FIG. 2B, wherein the numbers (i.e., 2, 3, ..., 34) denote intra prediction mode indices. The prediction modes 2-17 are denoted as horizontal prediction modes (H-26 to H+32), as the predominant sources of prediction is in horizontal direction. The modes 18-34 are denoted as vertical prediction modes (V-32 to V+32) accordingly. "H" and "V" in FIG. 2B are used to indicate the horizontal and vertical directionalities, respectively, while the numeric part of the identifier indicates the samples' displacement (also referred to as "angle parameter") at 1/32 sample fractions.

Table 1 shows the relationship between the directional prediction mode and the angle parameter A as specified by HEVC.

TABLE 1

| Horizontal directions | | | | | | | | | | | | | | | | |
|---|---|---|---|---|---|---|---|---|---|---|---|---|---|---|---|---|
| index | 2 | 3 | 4 | 5 | 6 | 7 | 8 | 9 | 10 | 11 | 12 | 13 | 14 | 15 | 16 | 17 |
| A | 32 | 26 | 21 | 17 | 13 | 9 | 5 | 2 | 0 | -2 | -5 | -9 | -13 | -17 | -21 | -26 |

| Vertical directions | | | | | | | | | | | | | | | | |
|---|---|---|---|---|---|---|---|---|---|---|---|---|---|---|---|---|
| index | 18 | 19 | 20 | 21 | 22 | 23 | 24 | 25 | 26 | 27 | 28 | 29 | 30 | 31 | 32 | 33 | 34 |
| A | -32 | -26 | -21 | -17 | -13 | -9 | -5 | -2 | 0 | 2 | 5 | 9 | 13 | 17 | 21 | 26 | 32 |

The directions with non-negative displacements (i.e., H0 to H+32 and V0 to V+32) are also denoted as positive directions, and the directions with negative displacements (i.e., H-2 to H-26 and V-2 to V-32) are also denoted as negative directions.

As shown in FIG. 2B, the defined angular directions have a sample accuracy of 1/32. As described above, the defined directions can be distinguished as either vertical or horizontal. The prediction modes in horizontal directions use either only left reference samples, or some left and some top reference samples. Similarly, the prediction modes in vertical directions use either only top reference samples, or some top and some left reference samples. In particular, the horizontal positive directions from H0 to H+32 use only the left reference samples for prediction. Similarly, the vertical positive directions from V0 to V+32 use only the top reference samples for prediction. Negative horizontal and vertical directions (H-2 to H-26 and V-2 to V-32) use reference samples both on the left and on the top for prediction.

In HEVC reference code, a reference array is first constructed using the top and left reference samples. For vertical predictions, the reference array is horizontal (i.e., a reference row) and for horizontal predictions, the reference array is vertical (i.e., a reference column). For the modes with positive directions, the reference array is simply the top or left reference samples depending on the direction:

$$topRef[x] = R(x, 0), 0 \leq x \leq 2N, \text{ for vertical predictions}$$

$$leftRef[y] = R(0, y), 0 \leq y \leq 2N, \text{ for horizontal predictions}$$

For the modes with negative directions, the reference array needs samples from both the top and left reference arrays. In this case, the reference array will extend to the negative indices beyond 0. Sample values on the reference array with positive indices are obtained as described above, depending on vertical or horizontal prediction. Those on the reference array with negative indices are obtained by projecting the left (for vertical predictions) or top reference samples (for horizontal predictions) on the reference array in the prediction direction:

$$topRef[x] = R(0, (x * B + 128) \gg 8), -N \leq x < 0, \text{ for vertical predictions}$$

$$leftRef[y] = R((y * B + 128) \gg 8, 0), -N \leq y < 0, \text{ for horizontal predictions}$$

where » denotes a bit shift operation to the right and *B* represents the inverse angle parameter corresponding to angle parameter A. For example, for A = -2, B = -4096, for A= -26, B = -315.

Once the reference array is constructed, the prediction at any sample position (*x, y*) inside the target PU is obtained by projecting the sample position to the reference array along the selected direction and interpolating a value for the sample at 1/32 sample accuracy. The predicted sample value is computed by interpolating between two closest reference samples:

$$P(x, y) = \big((32 - f) * topRef[x + i] + f * topRef[x + i + 1] + 16\big) \gg 5),$$

$$1 \leq x, y \leq N, \text{ for vertical predictions} \tag{1}$$

$$P(x,y) = \big((32 - f) * leftRef[y + i] + f * leftRef[y + i + 1] + 16\big) \gg 5),$$

$$1 \leq x, y \leq N, \text{ for horizontal predictions,} \qquad (2)$$

where $i$ and $f$ denote the integer part and the fractional part of the projected displacement from the sample location ($x$, $y$). If $\Delta$ denotes the projected displacement, then
$\Delta = x * A$, for horizontal predictions, and $\Delta = y * A$, for vertical predictions.

$$i = \Delta \gg 5, f = \Delta \,\&\, 31$$

where & denotes a bitwise AND operation. Note that, if $f = 0$, that is, there is no fractional part, and the predicted sample value is equal to the reference array sample value in the direction of prediction.

Some of the prediction modes such as the DC mode and directly horizontal (i.e., mode 10) and directly vertical modes (i.e., mode 26) may cause discontinuity at the CU boundaries of the prediction samples. Therefore, such prediction modes are followed by a post-processing step where the boundary of the predicted samples are smoothed using a low-pass filter. Here, directly horizontal mode refers to the prediction mode when the reference samples on the left side of a target block are repeated horizontally to the right for intra prediction. Similarly, directly vertical mode refers to the prediction mode when the reference samples on the top of a target block are repeated vertically down for intra prediction.

Since there are multiple intra prediction modes available, the decoder needs the mode information to form the prediction for an intra-coded CU. The encoder encodes the mode information using a most probable mode (MPM) set for the luma component. HEVC specifies an MPM set consisting of three distinct modes, which is constructed from the prediction modes of the intra coded CUs on the top and left of the current CU, the planar mode, the DC mode, and the directly vertical mode.

The applicable luma intra prediction mode for the current block can be coded using two different options. If the applicable mode is included in a constructed list of three most probable modes (MPM), the mode is signaled by an index in the MPM list. Otherwise, the mode is signaled by a fixed-length binarization of the mode index. The three most probable modes are derived from the intra prediction modes of the top and left neighboring blocks.

For an inter CU, the corresponding coding block is further partitioned into one or more prediction blocks. Inter prediction is performed on the PB level, and the corresponding PU contains the information about how inter prediction is performed. The motion information (i.e., motion vector and reference picture index) can be signaled in two methods, namely, "merge mode" and "advanced motion vector prediction (AMVP)."

In the merge mode, a video encoder or decoder assembles a candidate list based on already coded blocks, and the video encoder signals an index for one of the candidates in the candidate list. At the decoder side, the motion vector (MV) and the reference picture index are reconstructed based on the signaled candidate.

In AMVP, a video encoder or decoder assembles candidate lists based on motion vectors determined from already coded blocks. The video encoder then signals an index in the candidate list to identify a motion vector predictor (MVP) and signals a motion vector difference (MVD). At the decoder side, the motion vector (MV) is reconstructed as MVP+MVD. The applicable reference picture index is also explicitly coded in the PU syntax for AMVP.

The prediction residuals are then transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

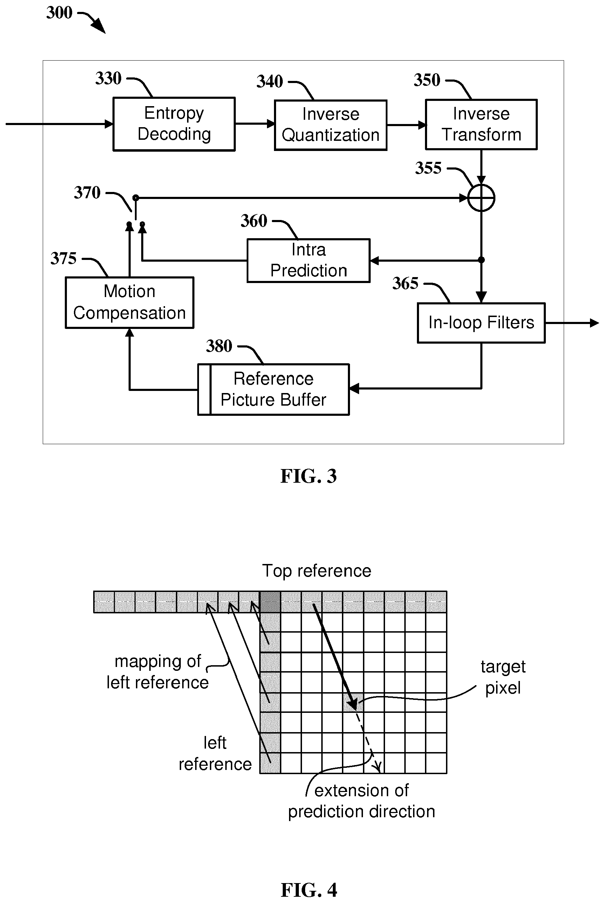

FIG. 3 illustrates a block diagram of an exemplary HEVC video decoder 300. In the exemplary decoder 300, a bitstream is decoded by the decoder elements as described below. Video decoder 300 generally performs a decoding pass reciprocal to the encoding pass as described in FIG. 1, which performs video decoding as part of encoding video data.

In particular, the input of the decoder includes a video bitstream, which may be generated by video encoder 100. The bitstream is first entropy decoded (330) to obtain transform coefficients, motion vectors, and other coded information. The transform coefficients are de-quantized (340) and inverse transformed (350) to decode the prediction residuals. Combining (355) the decoded prediction residuals and the predicted block, an image block is reconstructed.

The predicted block may be obtained (370) from intra prediction (360) or motion-compensated prediction (i.e., inter prediction) (375). As described above, AMVP and merge mode techniques may be used to derive motion vectors for motion compensation, which may use interpolation filters to calculate interpolated values for sub-integer samples of a reference block. In-loop filters (365) are applied to the reconstructed image. The filtered image is stored at a reference picture buffer (380).

As described above, in HEVC, encoding of a frame of a video sequence is based on a block structure. A frame is divided into square coding tree units (CTUs), which may undergo quadtree (QT) splitting to multiple coding units based on rate-distortion criteria. Each CU is either intra-predicted, that is spatially predicted from the causal neighbor CUs, or inter-predicted, that is, temporally predicted from reference frames already decoded. In I-slices all CUs are intra-predicted, whereas in P and B slices the CUs can be either intra or inter-predicted. For intra prediction, HEVC defines 35 prediction modes which include one planar mode (indexed as mode 0), one DC mode (indexed as mode 1) and 33 directional prediction modes (indexed as modes 2 - 34).

In JEM (Joint Exploration Model) under study by the Joint Video Exploration Team (JVET) for designing the next generation video compression standard, the QTBT (Quadtree plus Binary Tree) structure removes the concept of multiple partition types in HEVC, i.e., removes the separation of CU, PU and TU concepts. A Coding Tree Unit (CTU) is firstly partitioned by a quadtree structure. The quadtree leaf nodes are further partitioned by a binary tree structure. The binary tree leaf node is named as Coding Units (CUs), which is used for prediction and transform without further partitioning. Thus, the CU, PU and TU have the same block size in the new coding QTBT block structure. In JEM, a CU consists of Coding Blocks (CBs) of different color components.

As possible improvements to HEVC, JEM 3.0 uses 65 directional intra prediction modes in addition to the planar and DC modes. The modes are numbered from 2 to 66 in the increasing order, in the same fashion as done in HEVC from 2 to 34. The 65 directional prediction modes include the 33 directional prediction modes specified in HEVC plus 32 additional directional prediction modes that correspond to angles in-between two original angles. In other words, the prediction direction in JEM has twice the angle resolution of HEVC. The higher number of prediction modes has been proposed to exploit the possibility of angular structures with proposed larger block sizes. Corresponding to the higher number of modes, there is a higher number of angle parameter A values.

In addition to square CUs, JEM can also have rectangular CUs because of the QTBT structure. In this case, for positive directions, the reference array is constructed as follows:

$$topRef[x] = R(x, 0), 0 \leq x \leq W + H, \text{ for vertical predictions}$$

$$leftRef[y] = R(0, y), 0 \leq y \leq W + H, \text{ for horizontal predictions}$$

where $W$ and $H$ denote the width and the height of the target CU, respectively. For negative directions, the reference array is constructed as for positive indices. For negative indices, the projections of the left reference array (for vertical predictions) or top reference array (for horizontal predictions) are used:

$$topRef[x] = R(0, (x * B + 128) \gg 8), -H \leq x < 0, \text{ for vertical predictions}$$

$$leftRef[y] = R((y * B + 128) \gg 8, 0), -W \leq y < 0, \text{ for horizontal predictions.}$$

The prediction process basically remains the same as in HEVC. The sample values are computed as:

$$P(x, y) = \big((32 - f) * topRef[x + i] + f * topRef[x + i + 1] + 16\big) \gg 5,$$
$$1 \leq x \leq W, 1 \leq y \leq H, \text{ for vertical predictions} \qquad (3)$$

$$P(x, y) = \big((32 - f) * leftRef[y + i] + f * leftRef[y + i + 1] + 16\big) \gg 5,$$
$$1 \leq x \leq W, 1 \leq y \leq H, \text{ for horizontal predictions.} \qquad (4)$$

As described above, HEVC and JEM aim to model different directional structures by different angular prediction models. Depending on the directionality, some prediction directions are termed positive and some negative. The prediction models work well when the intensity values do not change too much along the prediction direction. However, in natural imagery, the intensity values on objects often undergo changes. For example, because of color property of the object itself, lighting, depth, motion, etc., the intensity values over a PU can undergo changes that cannot be sufficiently modelled using sample repetition. This is especially true when the PU size is large, for example, JEM has proposed to use CTU sizes up to 256. Therefore, we may consider other prediction models that may model the intensity change more efficiently.

We notice that as shown in FIG. 4, for negative angular predictions (i.e., with A < 0), if we extend the prediction direction in the opposite direction of the reference array, the line along the prediction direction passes through the right or the bottom edge of the block. In the present application, the line, passing through the target sample, along the prediction direction is also denoted as a prediction line. Because the available references are at the top and to the left of the block, for negative predictions, no reference samples are available to the right or below the block, which might help model the intensity gradient along the direction of prediction.

The present principles are directed to bi-directional intra prediction for negative directions. In one embodiment, we estimate a reference array to the right or below the current block using the samples of the top and left reference arrays. Using the estimated reference samples and the original reference samples, we can obtain two predictors along the prediction line, one from the top or left reference array, and another one from the estimated right or bottom reference array, then we can interpolate using the two predictors to obtain the predicted sample value for the target sample. If the estimation is good, and if the content inside the block has the selected directionality, the interpolated value would more closely represent the value at the target sample than the simple repetition of the original reference.

Here, since two predictors from opposite directions of the target sample, along the prediction line, are used for intra prediction, we refer to such a method as "bi-directional intra prediction," and those using a predictor from one direction (e.g., in AVC or HEVC) as "uni-directional intra prediction." With bi-directional intra prediction, the encoder may better model object orientations with intensity variation than the uni-directional prediction, leading to better RD (Rate-Distortion) performance.

Let $S(x1,y1)$ and $S(x2,y2)$ represent the sample intensities at $(x1,y1)$ and $(x2,y2)$, respectively, then the interpolated intensity at $(x, y)$, which lies on the line joining $(x1,y1)$ and $(x2, y2)$ can be computed as:

$$S(x, y) = \frac{L * S(x2, y2) + (D - L) * S(x1, y1)}{D},$$

or, equivalently,

$$S(x, y) = S(x1, y1) + \Delta_P, \Delta_P \equiv \left(\frac{L}{D}\right)(S(x2, y2) - S(x1, y1))$$

where $D$ represents the distance between $(x1,y1)$ and $(x2,y2)$, $L$ represents the distance between $(x,y)$ and $(x1,y1)$, and $\Delta_P$ represents the change in sample intensity with respect to the value at $(x1,y1)$. The interpolation value $S(x, y)$ will always lie within the intensity values $S(x1,y1)$ and $S(x2,y2)$. In image processing, it is common to use bilinear interpolation, which uses four sample values, to interpolate intermediate sample values. But here since we want to preserve the directionality of structures, we may apply only linear interpolation along the prediction directions.

In the following, using the negative vertical predictions as examples, we describe various embodiments for bi-directional intra prediction. The present principles can also be applied to negative horizontal predictions, since horizontal predictions can be implemented by swapping the top reference array and the side reference array, and swapping the height and the width. For the sake of generality, in the following discussions, we assume rectangular CUs since square CUs are just special cases as far as prediction is concerned.

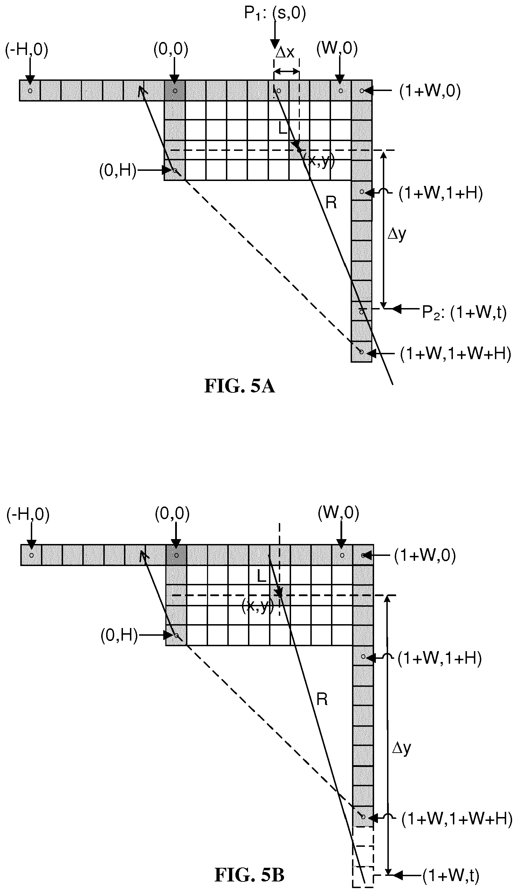

FIG. 5A illustrates a current block to be predicted using a negative intra prediction direction. Let $(s,0)$ denote the coordinate of the predictor from the top reference array (either as one of the reference samples or interpolated at resolution 1/32), which would be copied at the target location if uni-directional intra prediction is used.

In one embodiment, we estimate another reference array to the right of the block. The reference array starts at the coordinate $(1 + W, 0)$ and ends at $(1 + W, 1 + W + H)$. The length of the estimated right reference array is thus equal to the length of the top reference plus 1. The reference sample value at $(1 + W, 1)$ is set to the top row sample at $(W, 0)$, and the reference sample value at $(1 + W, 1 + W + H)$ is set to the left column sample at $(0, H)$. That is,

$$rightRef[1] = topRef[W],$$

$$rightRef[1 + W + H] = leftRef[H],$$

where *rightRef* denotes the estimated reference array. The reference value at any other sample (1 + *W, y*), 1 < *y* < 1 + *W* + *H*, is estimated as a linear interpolation between these two end-point estimates:

$$rightRef[y] =$$

$$(y * leftRef[H] + (W + H - y) * topRef[W] + ((W + H) \gg 1))/(W + H)$$

We extend the prediction line towards bottom right and let (1 + *W, t*) denote the coordinate of the other predictor, located where the prediction line intersects the estimated right reference array (either as one of the reference samples or the sample interpolated at resolution (1/32)). Both *s* and *t* have a sample resolution of (1/32).

In the above embodiment, sample values at (*W*, 0) and (0, *H*) are used to estimate the right reference array. In different embodiments, other sample values can be used for the estimation. For example, sample values at (*W* + 1,0) and (0, *H* + 1) can be used in the place of (*W*, 0) and (0, *H*), respectively. In another example, more reference samples from the already reconstructed/decoded blocks can be used to estimate the right reference array. The right reference array may also have a different length as described above. For example, the right reference array may start or end at a different position.

Let $\Delta_x$ denote the projected displacement on the top reference array, and let $\Delta_y$ denote the projected displacement on the right reference array, *s* and *t* can be calculated as (at 1/32 accuracy):

$$s = (x \ll 5) + \Delta_x, \ t = (y \ll 5) + \Delta_y. \qquad (5)$$

For negative prediction directions,

$$\Delta_x < 0, \text{ and } \Delta_y > 0.$$

As described above, for an angle parameter *A*, $\Delta_x$ is given as (at 1/32 accuracy):

$$\Delta_x = y * A$$

Using similarity of triangles between the triangles formed by {(*s*,0), (*x,y*), (*x*,0)} and {(1 + *W,y*), (*x,y*), (1 + *W,t*)}, we get:

$$\frac{y \ll 5}{\Delta_y} = \frac{\Delta_x}{((x - 1 - W) \ll 5)}$$

From this we get $\Delta_y$ (at 1/32 accuracy):

$$\Delta_y = \frac{((x - 1 - W) * y) \ll 10}{\Delta_x}$$

For implementation purpose, we can use

$$\Delta_y = \frac{(x-1-W)*y) \ll 10 + (\Delta_x \gg 1)}{\Delta_x} \qquad (6)$$

Due to the precision of calculation, the calculated location (1 + *W,t*) may be slighted off the prediction line. However, those skilled in the art would understand that the second predictor, as well as the first predictor, would be substantially on the prediction line. Thus, without loss of generality, we consider that the first and second predictors is on the prediction line in the following discussion.

Let $i_x$ and $f_x$ denote the integer and the fractional parts of $\Delta_x$. That is,

$$i_x = \Delta_x \gg 5, \text{ and } f_x = \Delta_x \& 31.$$

Let $P_1$ denote the first predictor value. Then we have:

$$P_1 = \left((32 - f_x) * topRef[x + i_x] + f_x * topRef[x + i_x + 1] + 16\right) \gg 5.$$

Similarly, let $i_y$ and $f_y$ denote the integer and the fractional parts of $\Delta_y$. That is,

$$i_y = \Delta_y \gg 5, \text{ and } f_y = \Delta_y \& 31. \tag{7}$$

Let $P_2$ denote the second predictor value. Then

$$P_2 = \left(\left(32 - f_y\right) * rightRef[y + i_y] + f_y * rightRef[y + i_y + 1] + 16\right) \gg 5. \tag{8}$$

Since the right reference array is an estimated one, we can compute $P_2$ at sample resolution of 1 sample without losing much accuracy:

$$P_2 = rightRef[y + i_y].$$

Denoting the distance of the sample at $(x,y)$ in the target block from the predictors at $(s, 0)$ and $(1 + W,t)$ by $L$ and $R$, respectively, we can interpolate the value at $(x, y)$ as:

$$P(x, y) = \frac{L*P_2 + R*P_1}{L+R} = P_1 + \frac{L}{D}(P_2 - P_1) = P_1 + \Delta P,$$

where $D \equiv L + R$, and $\Delta P \equiv \left(\frac{L}{D}\right)(P_2 - P_1).$ $\Delta P$ here represents the change in prediction value with respect to the first predictor.

In the prediction method as used in HEVC or JVET, only $P_1$ is used for intra prediction. In our proposed method, we use two predictors and may implement the method by adding an additional term to the existing predictor value. The additional term depends on the ratio $\left(\frac{L}{D}\right)$ and the difference between the two predictor values.

The radio $\frac{L}{D}$ can be calculated using triangle similarity. Referring to FIG. 5A, we see that, for $s \geq 0$,

$$\frac{L}{D} = \frac{-\Delta_x}{((1 + W) \ll 5) - s} = \frac{\Delta_x}{s - ((1 + W) \ll 5)}$$

Therefore, the update term can be computed as

$$\Delta P = \frac{\Delta_x * (P_2 - P_1) + (s \gg 1) - ((1+W) \ll 4)}{s - ((1+W) \ll 5)}. \tag{9}$$

If, on the other hand, $s < 0$, that is, the first predictor falls on the negative index side of the reference array, then the first predictor actually comes from the left column reference and the ratio $\frac{L}{D}$ can be calculated as:

$$\frac{L}{D} = \frac{x}{1+W}.$$

Therefore, the update term can be computed as

$$\Delta P = \frac{x*(P_2-P_1)+(W\gg1)}{(1+W)}. \qquad (10)$$

Given $\Delta P$, the interpolated value at target sample position $(x, y)$ can be obtained as:

$$P(x,y) = P_1 + \Delta P. \qquad (11)$$

In the present HEVC and JEM reference software, $\Delta_x$ and the prediction value $P_1$ are already computed and available. In one embodiment, we may perform the proposed bi-directional intra prediction by including the following additional steps:

1. Compute $\Delta_y$ using Eq. (6).
2. Compute the integer part and the fractional part of $\Delta_y$ using Eq. (7), then compute the second predictor value $P_2$ on the left reference array using Eq. (8).
3. Compute $s$ using Eq. (5) and depending on the sign of $s$, compute the update term. In particular, if $s \geq 0$, use Eq. (9), and if $s < 0$, use Eq. (10). Add the update term to the first prediction value $P_1$ to obtain the predicted sample value for the target sample.

In the above, the accuracy of (1/32), following the same in HEVC, is used for calculating $s$ or $t$. More generally, other accuracy can be used. For example, 1/64 can be used to accommodate 128 directions. In this case we may shift $(x, y)$ and other parameters, by 6 instead of 5.
In other embodiments, the predicted sample can be obtained by different implementations. For example, $P_2$ can be obtained first and $P(x, y) = P_2 + \Delta P'$, where $\Delta P' = \left(\frac{R}{D}\right) * (P_1 - P_2).$ In another example, rather than take a liner interpolation of both predictors, a zero-order model can be used, namely, we may use the nearer one of $P_1$ and $P_2$, with respect to the location of the current sample, as the predicted sample. In yet another example, a higher-order (e.g., 2nd order, 3rd order) interpolation may be used, based on the two closest reference samples on the top reference array and the two closest reference samples on the right/bottom reference arrays, along the prediction line.
Since the right reference array is of finite length, there may be some samples for which the prediction line will not intersect the right reference array. That is, we do not have a second predictor from the right reference array as described above. In this case, depending on how we calculate the update term, we present several different implementations in the following.
In a first embodiment, we assume that the estimated last sample value of the right reference array is repeated beyond the array. Therefore, for any target sample, if the second predictor falls beyond the length of the right reference array, we just use the last reference sample, that is, the sample at $(1 + W, 1 + H + W)$. Consequently, theoretically, the right reference array is extended below as much as required, as shown in FIG. 5B.
Recall that the integer and the fractional parts of $\Delta_y$ are $i_y$ and $f_y$. Therefore, to compute the second predictor value, we can perform as follows:

$$\text{if } y + i_y > W + H, \ P_2 = rightRef[W + H + 1];$$

Else,

$$P_2 = \left((32 - f_y) * rightRef[y + i_y] + f_y * rightRef[y + i_y + 1] + 16\right) \gg 5.$$

The update term can then be calculated accordingly as described above.

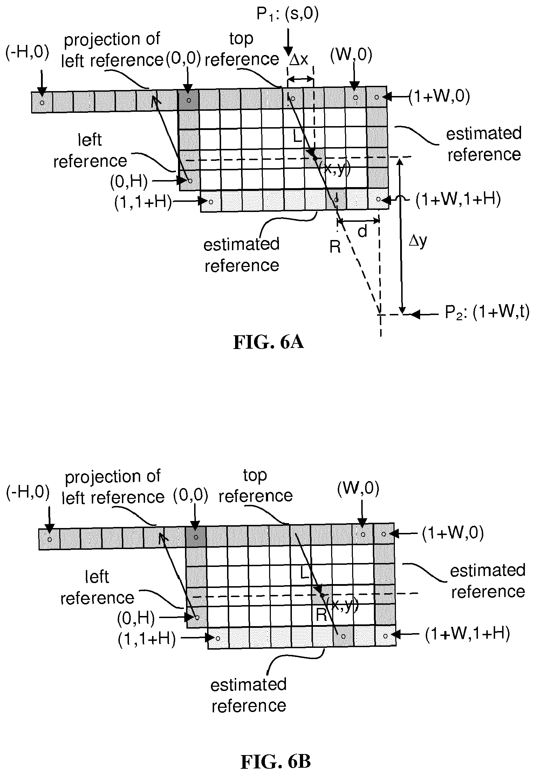

In another embodiment, instead of using only a right reference array, we use a right reference array of length $H$ and a bottom reference array of length $W$, as shown in FIG. 6A. The bottom reference array can be regarded as a 90-degree folding, of the right reference array as shown in FIG. 5A or 5B, at the sample location $(1 + W, 1 + H)$. Therefore, the sample value on the bottom reference array at $(x, 1 + H)$, $0 < x \le W$, is equal to the sample value $rightRef[1 + W + H - x]$.

With an estimated bottom reference array, for any negative prediction direction, all samples inside the target block will have the second predictor either on the right reference array or on the bottom reference array.

Now, the calculation of the update term will vary depending on if the second predictor is on the right reference array, or on the bottom reference array. If the second predictor is on the right reference away, the update term is calculated, for example, as explained with respect to FIG. 5A. If the second predictor is on the bottom reference array, we can first compute the predictor value $P_2$. Referring to FIG. 6A, the intercept $d$ can be calculated using the triangle similarity:

$$\frac{d}{((1+W)\ll 5)-s} = \frac{t-((1+H)\ll 5)}{t}, \text{ where } t = (y \ll 5) + \Delta_y.$$

Thus

$$d = (((1 + W) \ll 5) - s) * \frac{t-\big((1+H)\ll 5\big)}{t}.$$

Let $k \equiv (H \ll 5) + d$. Therefore $P_2$ can be computed as:

$$P_2 = \frac{rightRef[0] * \left(((H + W) \ll 5) - k\right) + k * rightRef[H + W] + ((H + W) \ll 4)}{(H + W) \ll 5}.$$

$$= \frac{topRef[W] * \left(((H + W) \ll 5) - k\right) + k * leftRef[H] + ((H + W) \ll 4)}{(H + W) \ll 5}$$

Now, if $s \ge 0$, the update term can be calculated as:

$$\Delta P = \frac{y*(P_2 - P_1)+(H \gg 1)}{(1+H)}.$$

If $s < 0$, let $l \equiv (((1 + W) \ll 5) - d)$. Then using the triangle similarity, the update term can be calculated as:

$$\Delta P = \frac{(x \ll 5)*(P_2 - P_1)+(l \gg 1)}{l}.$$

In yet another embodiment, the last sample values of the left and top reference arrays are directly used as estimates for the bottom and right reference arrays, respectively, as shown in FIG. 6B. Note that, for the negative directions, the last sample of the top reference array has coordinate $(W, 0)$ and the last sample of the left reference array has coordinate $(0, H)$. Even though the top reference array and the left reference array have other samples beyond the above coordinates, they are not required for negative prediction directions. In order to avoid discontinuity in the prediction inside the target block, the reference sample at $(1 + W, 1 + H)$ is estimated as a weighted average:

$$rightRef[H] = \frac{W * topRef[W] + H * leftRef[H]}{(W + H)}$$

Notice that this method of estimating the predictors is similar to that in the planar mode in HEVC and JEM. In the planar mode, the top reference sample at $(1 + W, 0)$ is repeated along the right edge of the block as a right reference array for horizontal interpolation. Similarly, the left reference sample at $(0,1 + H)$ is repeated along the bottom edge of the block as a bottom reference array for vertical interpolation.

In the above, we described several embodiments of bi-directional intra prediction. These embodiments can also be varied in different ways. For example, while we use reference samples at $(W, 0)$ and $(0, H)$ for estimating the right or bottom reference array, other reference samples can be used. In one example, we can use the reference samples at $(1 + W, 0)$ and $(0,1 + H)$ for estimating the bottom or right reference array. In another example, we can use a function of reference samples, for example, the weighted average or the average of reference samples at $(W, 0)$ and $(0, H)$ for both the bottom and right reference arrays.

In HEVC, the chroma components' prediction depends on the luma component prediction mode. The chroma components are tested only with 5 prediction modes for selecting the best prediction mode. The modes are planar, DC, directly horizontal (mode 10), directly vertical (mode 26), and the prediction mode of the luma component, called the direct (or derived) mode. If the direct mode equals any of the previous four, that is, planar, DC, directly horizontal, and directly vertical, then the vertical diagonal mode 34 substitutes that mode.

In JEM, in addition to these five prediction modes (that is, planar (mode 0), DC (mode 1), directly horizontal (mode 18), directly vertical (mode 50), and the direct mode), there is a new mode called LM-CHROMA. The LM-CHROMA mode does not use any of the defined prediction modes, rather the prediction is constructed from the reconstructed luma block. In order to distinguish the direct mode from LM-CHROMA, the direct mode is called the DM_CHROMA mode. If the DM_CHROMA mode equals one of the fixed four modes (i.e., PLANAR, DC, purely horizontal, and purely vertical), then the vertical diagonal mode 66 substitutes that mode.

Furthermore, unlike in HEVC, in JEM the chroma CU partitioning is de-coupled from the luma CU partitioning in INTRA frames. Therefore, the DM_CHROMA mode may correspond to the prediction mode of a luma CU which does not spatially correspond to the chroma CU under consideration.

The bi-directional intra prediction methods as described above can be applied to both luma and chroma components. In one embodiment, we may perform bi-directional intra prediction for the direct mode (in HEVC) or the DM_CHROMA mode (in JEM) if the mode is strictly negative, either vertical or horizontal.

The bi-directional intra prediction methods as described above are based on the physical intuition of object orientations and intensity variation in an image. They do not guarantee that the resulting RD performance will always be better than uni-directional intra prediction. Therefore, in one embodiment, we propose to include bi-directional intra prediction as an option by signaling a flag in the syntax, for example, in the SPS (Sequence Parameter Set), or PPS (Picture Parameter Set), or slice header.

In one embodiment, once bi-directional intra prediction is enabled, every INTRA CU having a negative angular prediction direction can choose between bi-directional or uni-directional intra prediction. The choice can be signaled by a 1-bit flag at the CU level, which can be context-encoded using context 0, or a mode-dependent context.

For the chroma components, in one embodiment, we can transmit one bit signaling if the corresponding chroma CU uses bi-directional intra prediction or not, independent of the luma CU signaling. The one-bit flag can be context-encoded using either context 0, or a mode-dependent context. In another embodiment, no additional signaling is used for the chroma components' prediction. Rather, the chroma components can use the same signaling as the luma CU at the center or top-left corner of the CTU. In this embodiment, if the luma signaling flag is enabled and the direct mode (in HEVC) or DM_CHROMA (in JEM) is strictly negative, then the CU is predicted with bi-directional intra prediction, otherwise uni-directional angular prediction is performed.

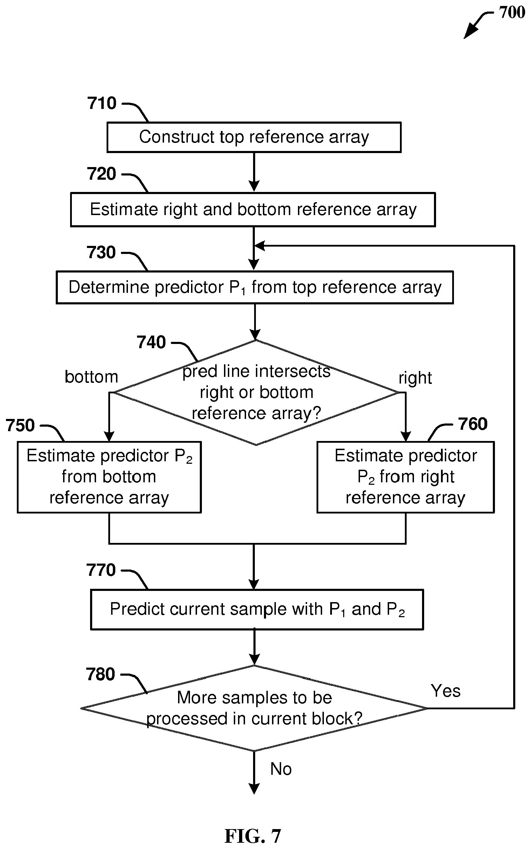

FIG. 7 illustrates an exemplary method 700 for performing bi-directional intra prediction for a vertical negative prediction direction for a current block, according to an embodiment of the present principles. Method 700 can be implemented at the encoder and decoder. Generally, the same reference array should be constructed or estimated, and the same interpolation method should be used, at both the encoder and decoder such that a bitstream generated by the encoder can be properly decoded by the decoder.

In this embodiment, we estimate both the right and bottom reference arrays for obtaining the second predictor. Specifically, in method 700, an encoder or decoder constructs (710) a top reference array, for example, as illustrated in FIG. 4. At step 720, the encoder or decoder estimates the right and bottom reference array, for example, using reference samples from the left and above neighbor blocks as illustrated in FIG. 6A or FIG. 6B. For a target sample, the first predictor value $P_1$ can be determined (730), along the prediction line, from the top reference array, for example, using Eq. (1) or (3).

At step 740, the encoder or decoder checks whether the prediction line intersects the right or bottom reference array. If the prediction line intersects with the bottom reference array, the second predictor value $P_2$ can be obtained (750) from the bottom reference array, for example, as illustrated in FIG. 6A or 6B. Otherwise, if the prediction line intersects with the right reference array, the second predictor value $P_2$ can be obtained (760) from the right reference array, for example, using Eq. (8). The target sample then can be predicted (770) based on both predictors, for example, using Eq. (11).

The encoder or decoder checks (780) whether more samples need to be predicted in the block. If yes, the control returns to step 730. Otherwise, bi-directional intra prediction for the current block is completed for the given negative prediction direction.

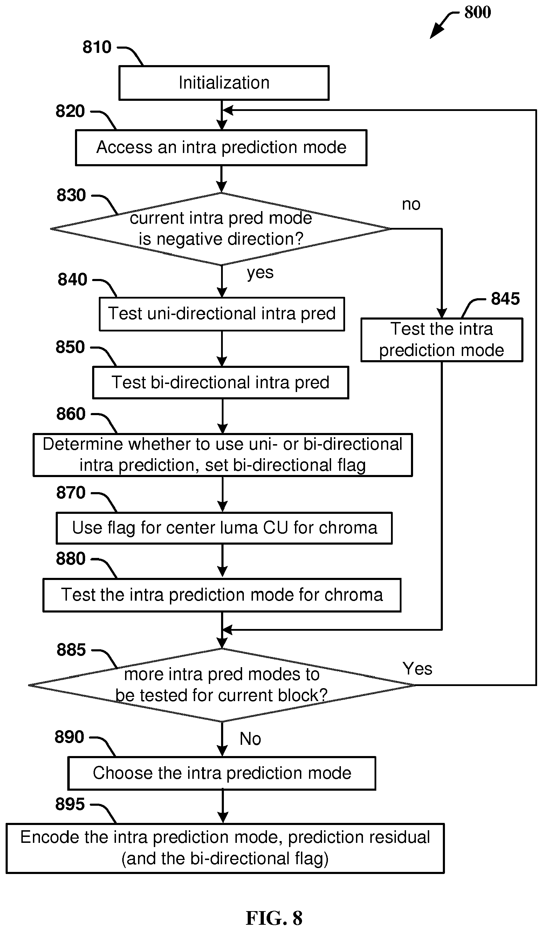

FIG. 8 illustrates an exemplary method 800 for encoding with bi-directional intra prediction, according to an embodiment of the present principles. Method 800 may accept a video sequence to be encoded as input. At initialization step 810, the encoder may decide whether bi-directional intra prediction is to be used for encoding the video sequence and which prediction modes may use bi-directional intra prediction. For example, the encoder may signal in the slice header, PPS, or SPS, that all CUs in a slice, picture, sequence, respectively, can use the bi-directional intra prediction option.

At step 820, the encoder accesses the current intra prediction mode to be tested. The encoder checks (830) whether the current intra prediction mode belongs to the set of prediction modes that may use bi-directional prediction, for example, by checking whether the current prediction mode has a negative direction.

If bi-directional intra prediction is not to be used, the encoder tests (845) the intra prediction mode for the block using uni-directional intra prediction, for example, as in HEVC. Otherwise, if bi-directional intra prediction may be used, the encoder tests (840) the intra prediction mode for the luma component with uni-directional intra prediction, for example, performing intra prediction as in HEVC, and the encoder also tests (850) the intra prediction mode for the luma component with bi-directional intra prediction, for example, by performing bi-directional intra prediction using method 700 and various embodiments as described above. The test may be done by computing the RD cost. Based on the coding performance, the encoder determines (860) whether to use bi-directional intra prediction for the current intra prediction mode, and a bi-directional flag is set to 0 or 1 based on the choice of uni- and bi-directional prediction.

For the chroma components, the encoder may determine (870) whether to use bi-directional intra prediction based on the bi-directional flag for the center luma CU for DM_CHROMA mode. If there is no directional flag for the luma CU (because its prediction mode does not fall in the set of modes that use bi-directional prediction), a default value of 0 is used indicating the uni-directional prediction.

The current intra prediction mode is then tested (880) for the chroma components. The encoder checks (885) whether more intra prediction modes are to be tested for the current block. If yes, the control returns to step 820. Otherwise, the encoder chooses (890) the best intra prediction mode to be used based on the testing results (e.g., choosing the one with the smallest RD cost among different intra prediction modes). The intra prediction mode and prediction residual are then encoded (895).

If the intra prediction mode is from the set of intra prediction modes that may use bi-directional intra prediction, the bi-directional flag is also encoded (895), for example, context encoded with context 0, or a mode-dependent context. The encoding process can also be repeated for other blocks that use intra coding.

In the above, method 800 estimates both bottom reference array and right reference array for bi-directional intra prediction. In a different implementation, method 800 may only estimate the right reference array as illustrated in FIGs. 5A and 5B. In this implementation, the second predictor will be obtained from the right reference array.

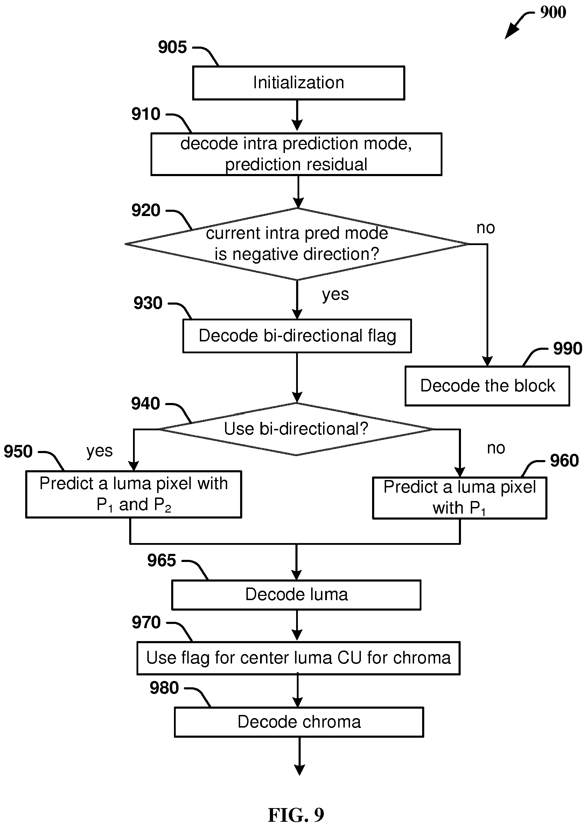

FIG. 9 illustrates an exemplary method 900 for decoding with bi-directional intra prediction, according to an embodiment of the present principles. Method 900 may accept a bitstream to be decoded as input, for example, use the output of method 800 as input. At initialization step 905, the decoder may decide whether bi-directional intra prediction is to be used for decoding the video sequence and which prediction modes may use bi-directional intra prediction.

At step 910, the decoder decodes the intra prediction mode for the current block. The decoder checks (920) whether the intra prediction mode belongs to the selected set of prediction modes that may use bi-directional prediction, for example, by checking whether the current prediction mode has a negative direction. If bi-directional intra prediction is not to be used, the decoder decodes (990) the block using uni-directional prediction. Otherwise, if bi-directional intra prediction may be used, the decoder decodes (930) a bi-directional flag indicating (940) whether uni-directional or bi-directional intra prediction is used for the current block. The decoder decodes the bi-directional flag only if the prediction mode belongs to the selected set. If the prediction mode does not belong to the set, the decoder does not decode the signaling flag and a default value of zero is assumed for the bi-directional flag.

If uni-directional prediction is used, the decoder preforms (960) uni-directional intra prediction, for example, performing intra prediction as in HEVC. If bi-directional prediction is used, the decoder performs (950) bi-directional intra prediction using, for example, method 700 and various embodiments as described above. Using the prediction and prediction residuals, the current block can be decoded (965).

For the chroma components, the decoder may determine (970) whether to use bi-directional intra prediction based on the bi-directional flag for the center luma CU. The chroma components are then decoded (980). In another embodiment, the signaling flag for the chroma components can be context-encoded with a mode-dependent context. The decoding process can be repeated for other blocks that use intra coding.

In the above, we describe various embodiments for bi-directional intra prediction for negative intra prediction directions. These embodiments can be implemented in combination with bi-directional intra prediction for positive intra prediction directions.

Various methods are described above, and each of the methods comprises one or more steps or actions for achieving the described method. Unless a specific order of steps or actions is required for proper operation of the method, the order and/or use of specific steps and/or actions may be modified or combined.

Various numeric values are used in the present application, for example, the precision of prediction direction (1/32), or the length of reference array (W, H, W+H, or 1+W+H). It should be noted that the specific values are for exemplary purposes and the present principles are not limited to these specific values.

In the above, various embodiments are described with respect to HEVC, or JVET based on the HEVC standard. For example, various methods of bi-directional intra prediction as described above can be used to modify the intra prediction module (160, 360) of the JVET or HEVC encoder and decoder as shown in FIG. 1 and FIG. 3. However, the present principles are not limited to JVET or HEVC, and can be applied to other standards, recommendations, and extensions thereof.

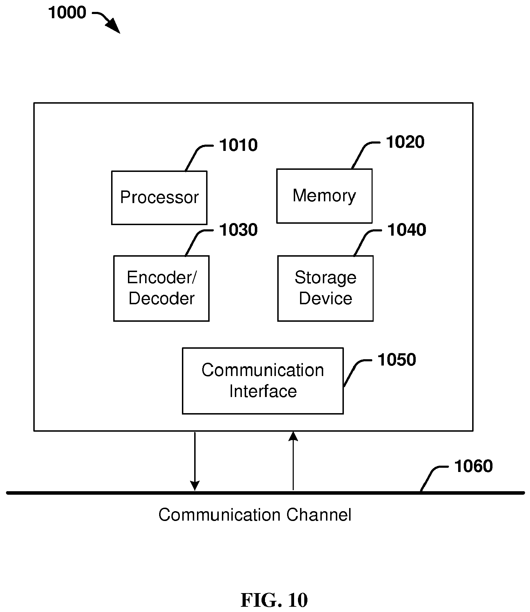

FIG. 10 illustrates a block diagram of an exemplary system in which various aspects of the exemplary embodiments of the present principles may be implemented. System 1000 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 1000 may be communicatively coupled to other similar systems, and to a display via a communication channel as shown in FIG. 10 and as known by those skilled in the art to implement the exemplary video system described above.

The system 1000 may include at least one processor 1010 configured to execute instructions loaded therein for implementing the various processes as discussed above. Processor 1010 may include embedded memory, input output interface and various other circuitries as known in the art. The system 1000 may also include at least one memory 1020 (e.g., a volatile memory device, a non-volatile memory device). System 1000 may additionally include a storage device 1020, which may include non-volatile memory, including, but not limited to, EEPROM, ROM, PROM, RAM, DRAM, SRAM, flash, magnetic disk drive, and/or optical disk drive. The storage device 1040 may comprise an internal storage device, an attached storage device and/or a network accessible storage device, as non-limiting examples. System 1000 may also include an encoder/decoder module 1030 configured to process data to provide an encoded video or decoded video.

Encoder/decoder module 1030 represents the module(s) that may be included in a device to perform the encoding and/or decoding functions. As is known, a device may include one or both of the encoding and decoding modules. Additionally, encoder/decoder module 1030 may be implemented as a separate element of system 1000 or may be incorporated within processors 1010 as a combination of hardware and software as known to those skilled in the art.

Program code to be loaded onto processors 1010 to perform the various processes described hereinabove may be stored in storage device 1040 and subsequently loaded onto memory 1020 for execution by processors 1010. In accordance with the exemplary embodiments of the present principles, one or more of the processor(s) 1010, memory 1020, storage device 1040 and encoder/decoder module 1030 may store one or more of the various items during the performance of the processes discussed herein above, including, but not limited to the input video, the decoded video, the bitstream, equations, formula, matrices, variables, operations, and operational logic.

The system 1000 may also include communication interface 1050 that enables communication with other devices via communication channel 1060. The communication interface 1050 may include, but is not limited to a transceiver configured to transmit and receive data from communication channel 1060. The communication interface may include, but is not limited to, a modem or network card and the communication channel may be implemented within a wired and/or wireless medium. The various components of system 1000 may be connected or communicatively coupled together using various suitable connections, including, but not limited to internal buses, wires, and printed circuit boards.

The exemplary embodiments according to the present principles may be carried out by computer software implemented by the processor 1010 or by hardware, or by a combination of hardware and software. As a non-limiting example, the exemplary embodiments according to the present principles may be implemented by one or more integrated circuits. The memory 1020 may be of any type appropriate to the technical environment and may be implemented using any appropriate data storage technology, such as optical memory devices, magnetic memory devices, semiconductor-based memory devices, fixed memory and removable memory, as non-limiting examples. The processor 1010 may be of any type appropriate to the technical environment, and may encompass one or more of microprocessors, general purpose computers, special purpose computers and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A method of video decoding, comprising:

    decoding (910) a directional intra prediction mode for a current block of a picture in a video, said decoded intra prediction mode having a negative direction;
    accessing (730, 750, 760) a first predictor and a second predictor for a sample within said current block, wherein said sample is substantially located, on a line along said direction, between said first and second predictors;
    predicting (770, 950) a sample value of said sample, by using said first and second predictors; and
    decoding (965) said sample of said current block based on said predicted sample value.

2. A method of video encoding, comprising:

    accessing (820) a directional intra prediction mode for a current block of a picture in a video, said accessed intra prediction mode having a negative direction;
    accessing (730, 750, 760) a first predictor and a second predictor for a sample within said current block, wherein said sample is substantially located, on a line along said direction, between said first and second predictors;
    predicting (770, 950) a sample value of said sample, by using said first and second predictors; and
    encoding (895) said current block based on said predicted sample value.

3. An apparatus (1000) for video decoding, comprising at least a memory and one or more processors, wherein said one or more processors are configured to:

    decode a directional intra prediction mode for a current block of a picture in a video, said decoded intra prediction mode having a negative direction;

access a first predictor and a second predictor for a sample within said current block, wherein said sample is substantially located, on a line along said direction, between said first and second predictors;

predict a sample value of said sample, by using said first and second predictors; and

decode said sample of said current block based on said predicted sample value.

4. An apparatus (1000) for video encoding, comprising at least a memory and one or more processors, wherein said one or more processors are configured to:

access a directional intra prediction mode for a current block of a picture in a video, said accessed intra prediction mode having a negative direction;

access a first predictor and a second predictor for a sample within said current block, wherein said sample is substantially located, on a line along said direction, between said first and second predictors;

predict a sample value of said sample, by using said first and second predictors; and

encode said current block based on said predicted sample value.

5. The method of claim 1 or 2, or the apparatus of claim 3 or 4, wherein said predicted sample value is based on an interpolation of values of said first and second predictor.

6. The method of any one of claims 1, 2 and 5, or the apparatus of any one of claims 3-5, wherein said first predictor is determined from one or more reference samples of an above or left neighbor block of said current block.

7. The method of any one of claims 1, 2, 5 and 6, or the apparatus of any one of claims 3-6, wherein said second predictor is determined from one or more second reference samples of a set of reference samples, wherein said set of reference samples corresponds to one of (1) an estimated bottom reference array of said current block and (2) an estimated right reference array of said current block.

8. The method of claim 7, or the apparatus of claim 7, wherein said estimated bottom reference array or said estimated right is estimated based on one or more samples from said above or left neighbor block.

9. The method of claim 7, or the apparatus of claim 7, wherein said estimated right reference array is estimated based on a bottom-right sample of said above neighbor block and a bottom-right sample of said left neighbor block.

10. The method of claim 9, or the apparatus of claim 9, wherein said estimated right reference array is estimated based on an interpolation of said bottom-right sample of said above neighbor block and said bottom-right sample of said left neighbor block.

11. The method of claim 7, or the apparatus of claim 7, wherein a number of reference samples in said estimated right reference array is based on $W + H$, and wherein W and H are a width and height of said current block, respectively.

12. The method of claim 7, or the apparatus of claim 7, wherein said estimated bottom or right reference array is estimated based a bottom-right sample of said left neighbor block.

13. The method of any one of claims 1, 2 and 5-12, or the apparatus of any one of claims 3-12, wherein a flag is used to indicate whether a bi-directional intra prediction mode is used for said current block.

14. A video signal, formatted to include:

encoded data indicative of a directional intra prediction mode for a current block of a picture in a video, said accessed intra prediction mode having a negative direction; and

encoded data of a difference between a sample value of a sample of said current block and a corresponding predicted sample value, wherein said predicted sample is generated based on a first predictor and a second predictor for said sample within said current block, and wherein said sample is substantially located, on a line along said direction, between said first and second predictors.

15. A computer program comprising software code instructions configured to perform the method according to any one of claims 1, 2 and 5-13, when the computer program is executed by one or more processors.

FIG. 1

FIG. 2A

FIG. 2B

300

FIG. 3

FIG. 4

$P_1$: (s,0)

(-H,0)

(0,0)

$\Delta x$

(W,0)

(1+W,0)

L

(x,y)

R

(0,H)

(1+W,1+H)

$\Delta y$

$P_2$: (1+W,t)

(1+W,1+W+H)

**FIG. 5A**

(-H,0)

(0,0)

(W,0)

(1+W,0)

L

(x,y)

(0,H)

R

(1+W,1+H)

$\Delta y$

(1+W,1+W+H)

**FIG. 5B**

(1+W,t)

**FIG. 6A**

**FIG. 6B**

700

710 — Construct top reference array

720 — Estimate right and bottom reference array

730 — Determine predictor $P_1$ from top reference array

740 — pred line intersects right or bottom reference array?

bottom

right

750 — Estimate predictor $P_2$ from bottom reference array

760 — Estimate predictor $P_2$ from right reference array

770 — Predict current sample with $P_1$ and $P_2$

780 — More samples to be processed in current block?

Yes

No

**FIG. 7**

810 — Initialization

820 — Access an intra prediction mode

830 — current intra pred mode is negative direction?

no

yes

840 — Test uni-directional intra pred

845 — Test the intra prediction mode

850 — Test bi-directional intra pred

860 — Determine whether to use uni- or bi-directional intra prediction, set bi-directional flag

870 — Use flag for center luma CU for chroma

880 — Test the intra prediction mode for chroma

885 — more intra pred modes to be tested for current block?

Yes

No

890 — Choose the intra prediction mode

895 — Encode the intra prediction mode, prediction residual (and the bi-directional flag)

800

**FIG. 8**

900

905

Initialization

910

decode intra prediction mode,
prediction residual

920

current intra pred mode
is negative direction?

no

yes

930

Decode bi-directional flag

990

Decode the block

940

Use bi-directional?

950

yes

Predict a luma pixel with
$P_1$ and $P_2$

960

no

Predict a luma pixel
with $P_1$

965

Decode luma

970

Use flag for center luma CU for chroma

980

Decode chroma

FIG. 9

1000

1010 Processor

1020 Memory

1030 Encoder/Decoder

1040 Storage Device

1050 Communication Interface

1060

Communication Channel

**FIG. 10**

Europäisches
Patentamt

European
Patent Office

Office européen
des brevets

# EUROPEAN SEARCH REPORT

Application Number

EP 17 30 5629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAKAHASHI M ET AL: "TSIP: Improved intra prediction method", 33. VCEG MEETING; 82. MPEG MEETING; 20-10-2007 - 20-10-2007; SHENZHEN;(VIDEO CODING EXPERTS GROUP OF ITU-T SG.16),, no. VCEG-AG07, 20 October 2007 (2007-10-20), XP030003611, ISSN: 0000-0095 * figures 2, 3 * * page 1 - page 2 * | 1-15 | INV. H04N19/593 |
| X | TAICHIRO SHIODERA ET AL: "Block Based Extra/Inter-Polating Prediction for Intra Coding", IEEE INTERNATIONAL CONFERENCE ON IMAGE PROCESSING, ICIP 2007, IEEE, PI, 1 September 2007 (2007-09-01), pages VI-445, XP031158358, ISBN: 978-1-4244-1436-9 | 1-4,11, 13-15 | |
| A | * abstract; figures 3, 4 * * Section 3 * | 5-10,12 | |
| A | EP 2 728 884 A2 (SAMSUNG ELECTRONICS CO LTD [KR]) 7 May 2014 (2014-05-07) * abstract; figures 20A,B * | 1-15 | TECHNICAL FIELDS SEARCHED (IPC) H04N |
| A | JANI LAINEMA ET AL: "Intra Coding of the HEVC Standard", IEEE TRANSACTIONS ON CIRCUITS AND SYSTEMS FOR VIDEO TECHNOLOGY, IEEE SERVICE CENTER, PISCATAWAY, NJ, US, vol. 22, no. 12, 1 December 2012 (2012-12-01), pages 1792-1801, XP011487148, ISSN: 1051-8215, DOI: 10.1109/TCSVT.2012.2221525 * the whole document * | 1-15 | |

The present search report has been drawn up for all claims

| Place of search | Date of completion of the search | Examiner |
|---|---|---|
| The Hague | 12 July 2017 | Streich, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 5629

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2017

| Patent document cited in search report | | Publication date | Patent family member(s) | | Publication date |
|---|---|---|---|---|---|
| EP 2728884 | A2 | 07-05-2014 | AU | 2012276407 A1 | 06-02-2014 |
| | | | AU | 2016201361 A1 | 24-03-2016 |
| | | | AU | 2017201660 A1 | 30-03-2017 |
| | | | CA | 2840486 A1 | 03-01-2013 |
| | | | CN | 103765901 A | 30-04-2014 |
| | | | CN | 104918055 A | 16-09-2015 |
| | | | CN | 104954805 A | 30-09-2015 |
| | | | CN | 105100808 A | 25-11-2015 |
| | | | CN | 105100809 A | 25-11-2015 |
| | | | EP | 2728884 A2 | 07-05-2014 |
| | | | EP | 2919466 A2 | 16-09-2015 |
| | | | EP | 2919467 A2 | 16-09-2015 |
| | | | EP | 2919468 A2 | 16-09-2015 |
| | | | EP | 2919469 A2 | 16-09-2015 |
| | | | JP | 5956572 B2 | 27-07-2016 |
| | | | JP | 6101734 B2 | 22-03-2017 |
| | | | JP | 6101735 B2 | 22-03-2017 |
| | | | JP | 6101736 B2 | 22-03-2017 |
| | | | JP | 6101737 B2 | 22-03-2017 |
| | | | JP | 2014523187 A | 08-09-2014 |
| | | | JP | 2015167388 A | 24-09-2015 |
| | | | JP | 2015167389 A | 24-09-2015 |
| | | | JP | 2015181254 A | 15-10-2015 |
| | | | JP | 2015181255 A | 15-10-2015 |
| | | | KR | 20130002297 A | 07-01-2013 |
| | | | KR | 20150009500 A | 26-01-2015 |
| | | | KR | 20150059143 A | 29-05-2015 |
| | | | KR | 20150059144 A | 29-05-2015 |
| | | | KR | 20150059145 A | 29-05-2015 |
| | | | KR | 20150059146 A | 29-05-2015 |
| | | | MX | 337647 B | 14-03-2016 |
| | | | PH | 12016500446 A1 | 06-06-2016 |
| | | | PH | 12016500448 A1 | 06-06-2016 |
| | | | PH | 12016500450 A1 | 06-06-2016 |
| | | | PH | 12016500451 A1 | 06-06-2016 |
| | | | RU | 2014102592 A | 10-08-2015 |
| | | | TW | 201309037 A | 16-02-2013 |
| | | | TW | 201639373 A | 01-11-2016 |
| | | | US | 2014133565 A1 | 15-05-2014 |
| | | | US | 2015264379 A1 | 17-09-2015 |
| | | | US | 2015264380 A1 | 17-09-2015 |
| | | | US | 2015264381 A1 | 17-09-2015 |
| | | | US | 2015264382 A1 | 17-09-2015 |
| | | | US | 2015288980 A1 | 08-10-2015 |
| | | | WO | 2013002586 A2 | 03-01-2013 |

EPO FORM P0459

For more details about this annex : see Official Journal of the European Patent Office, No. 12/82